# EUROPÄISCHE PATENTSCHRIFT

(11) **EP 3 163 014 B1**
(45) Veröffentlichungstag und Bekanntmachung des Hinweises auf die Patenterteilung: **13.03.2019**
(21) Anmeldenummer: 16002064.0
(22) Anmeldetag: 23.09.2016
(51) Int. Cl.: F01B 1/10, F02B 75/06, F16F 15/26, F16J 1/14, F16J 1/16

(54) **SCHWENKLAGER FÜR ZWEI PLEUEL**
PIVOT BEARING FOR TWO CONNECTING RODS
PALIER D'ARTICULATION POUR DEUX BIELLES

(30) Priorität: 21.10.2015 DE 102015013631
(43) Veröffentlichungstag der Anmeldung: 03.05.2017
(73) Patentinhaber: Neander Motors AG, 24143 Kiel (DE)
(72) Erfinder: Brüstle, Claus, D-74228 Nordheim (DE)
(74) Vertreter: Lobemeier, Martin Landolf

(56) Entgegenhaltungen:
- EP-A1- 2 792 846
- EP-A2- 2 426 336
- DE-A1-102006 053 923
- DE-A1-102013 009 250
- DE-B4-102010 051 682

## Beschreibung

Die Erfindung bezieht sich auf eine Brennkraftmaschine mit einem Schwenklager für zwei Pleuel in einem Hubkolben einer Brennkraftmaschine mit zwei Kurbelwellen, die über den Hubkolben und die Pleuel angetrieben werden.

Es ist ein Schwenklager für einen Hubkolben einer Brennkraftmaschine bekannt, EP 2 426 336 A2, der zur Aufnahme von zwei Pleueln ausgebildet ist. Die Pleuel des Hubkolbens wirken mit zwei Kurbelwellen der Brennkraftmaschine zusammen und sind mittels Pleuelaugen unter Vermittlung von in Bohrungen von letzteren eingesetzten Pleuelzapfen relativbeweglich angeordnet. Zwischen den Pleuellagern ist ein Zwischenraum für die Pleuelaugen vorgesehen. Mit diesem Schwenklager wird die beim Umlauf der beiden Kurbelwellen eine systemisch bedingte Asymmetrie kompensiert.

In der JP 61-149745 wird eine Brennkraftmaschine behandelt, die einen Hubkolben umfasst. Der Hubkolben ist über zwei Pleuel mit zwei Kurbelwellen verbunden. Die Pleuel stehen mit Pleuelaugen mit einem kolbenbolzenartigen Lagerzapfen in Wirkverbindung, der von Bohrungen beabstandeter, zylindrischer Lagerscheiben aufgenommen wird. Die Lagerscheiben wiederum sind in Bohrungen des Hubkolbens in der Weise eingesetzt, dass sie an axialen Anschlägen in den Bohrungen des Kolbens anliegen. Zur Axialfixierung der Lagerscheiben und des Lagerzapfens dienen radiale Sicherungsringe.

Es ist Aufgabe der Erfindung ein hochbelastbares jedoch relativ leichtgewichtiges Schwenklager für einen Hubkolben einer Brennkraftmaschine zu konzipieren, das zwei Pleuel gelenkig aufnimmt, wobei der Hubkolben und die Pleuel zwei Kurbelwellen antreiben. Dabei sollte aber auch das Schwenklager bezüglich Festigkeit und Verschleiß optimiert werden.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass das Schwenklager des Hubkolbens, das unter Vermittlung von zwei Pleueln zwei Kurbelwellen der Brennkraftmaschine antreibt, aufgrund der baulichen Gestaltung und Werkstoffwahl ein leichtgewichtiges geringere Massenkräfte verursachendes Bauteil im Kurbeltrieb dieser Brennkraftmaschine darstellt. Besagte Gestaltung und Werkstoffwahl wirken sich positiv auf die dynamischen Motoreigenschaften und die mechanische Beanspruchung im Kurbeltreib aus. Die beiden topfförmigen Zylinderkörper mit ihren Lageringmänteln, Basiswänden und Lagerwänden bilden vorbildliche Komponenten, die leicht umsetzbar sind. Hervorzuheben in diesem Zusammenhang ist auch die Verbindung der beiden Zylinderkörper über die Verbindungsstützen, die es ermöglichen durch entsprechende Ausbildung, den auftretenden Beanspruchungen bei gezieltem Einsatz von Leichtbaumaßnahmen die erforderliche Standfestigkeit zu verleihen. Vorteilhaft ist, wenn das Schwenklager aus einem Werkstoff besteht, der bei hoher Festigkeit und geringem Verschleiß eine gezielte geringgewichtige Konstruktion des Schwenklagers bewirkt. Dafür eignet sich ausgezeichnet ein Stahlguss für statisch und dynamisch hoch belastbare und besonderem Verschleiß ausgesetzte Bauteile; aber auch ein ultrahochkohlenstoffhaltiger Leichtbaustahl (UHC).

Die Lösung, dass zwischen den Basiswänden der Zylinderkörper drei Verbindungsstützen vorgesehen sind, wovon zwei Verbindungsstützen in Richtung des Kolbenbodens des Hubkolbens mit Abstand einerseits zu der die Zentren der Pleuelbolzen der Pleuelaugen schneidenden Pleuelaugenebene und andererseits zu der Mittellängsachse des Hubkolbens angebracht sind, wobei die dritte Verbindungsstütze in Richtung der Kurbelwellen beabstandet zu besagter Pleuelaugenebene der Mittellängsachse des Hubkolbens liegt.

Der Einbau der Pleuel wird dadurch erleichtert, dass die Basiswände der Zylinderkörper von dem ersten zum Kolbenboden hin gerichteten Ringabschnitt der Zylinderkörper aus bis zum zweiten gegenüberliegenden in Richtung Kurbelwellen hin gerichteten Ringabschnitt der Zylinderkörper zur definierten Bildung des Zwischenraums für die Pleuelaugen V-förmig auseinanderlaufen. Bauteiloptimierend ist zum einen, wenn die Lagerbuchsen mit definiertem Abstand über die radiale Begrenzungsebenen der Lagermäntel hinausragen und zum anderen, wenn jeder Lagerringmantel an einer Innenseite im Bereich der Lagerbuchsen mit den ersten örtlichen Verdickungsabschnitten versehen ist, wobei darüber hinaus die Lagerbuchsen in dem den Kurbelwellen zugekehrten und beabstandet zu der Pleuelaugenebene zwischen den ersten Verdickungsabschnitten und den Bolzenbohrungen der Lagerbuchsen liegenden Bereich zweite Verdickungsabschnitte aufweisen

Maßstäbe setzt die technische Konstruktion, bei der von der Innenseite des ersten Ringabschnitts aus in Richtung der Lagerbuchsen ein oder mehrere Versteifungsrippen vorgesehen sind. Unterstützt wird dies dadurch, dass einerseits wenigstens eine Versteifungsrippen in der Mittellängsachse des Kolbens radial zwischen der Innenseite und einem die Lagerbuchsen verbindenden auf der Pleuelaugenebene liegenden Quersteg verläuft und dass andererseits mehrere weitere Rippe sekantenartig die Innenseite mit den Lagerbuchsen vereinen.

Schließlich trägt zur Optimierung des Schwenklagers bei, dass die Basiswände zwischen der Pleuelaugenebne und dem zweiten Ringabschnitt ein oder mehrere Durchgangsöffnungen zur Gewichtserleichterung aufweisen.

In der Zeichnung wird ein Ausführungsbeispiel der Erfindung gezeigt, das nachstehend näher erläutert wird.

Es zeigen
Fig. 1 ein schematischer Teilquerschnitt durch eine Brennkraftmaschine mit einem Schwenklager für zwei Pleuel,

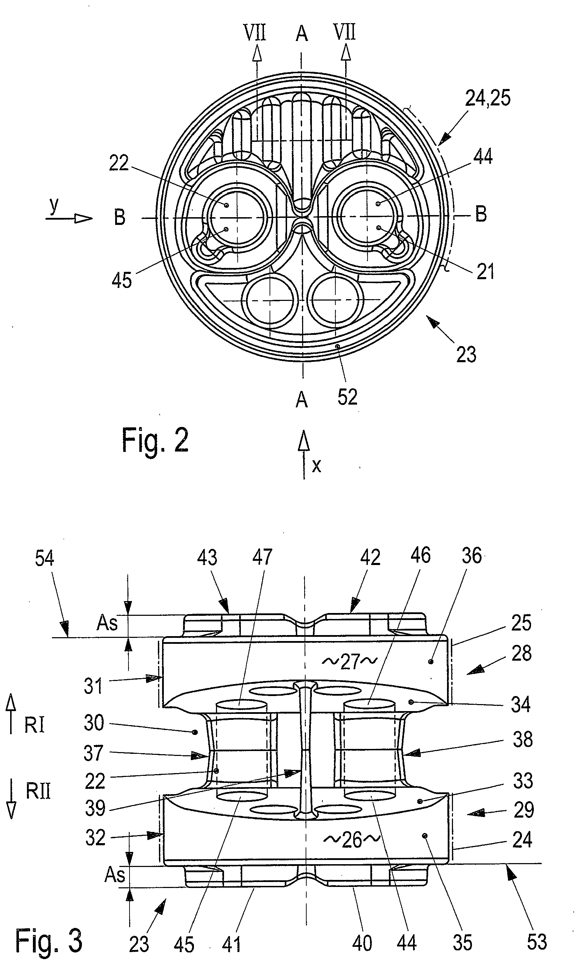

Fig. 2 eine Einzelheit W des Schwenklagers nach Fig. 1,
Fig. 3 eine Ansicht in Pfeilrichtung X der Fig. 2,
Fig. 4 eine schematische Ansicht in Pfeilrichtung Y der Fig. 3,
Fig. 5 eine Darstellung des Schwenklagers gemäß Fig. 2,
Fig. 6 eine perspektivische Ansicht des Schwenklagers beispielsweise basieren auf der Fig. 2 mit einem örtlichen Prinzipquerschnitt,
Fig. 7 einen Schnitt nach der Linie VII-VII der Fig. 2.

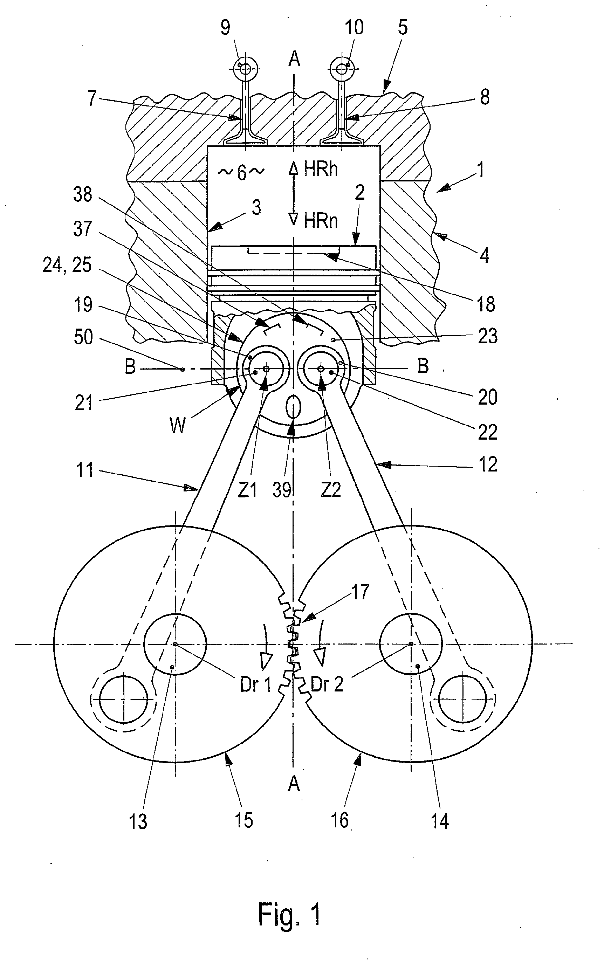

Eine bspw. als Außenbordmotor einsetzbare Brennkraftmaschine 1 -Fig. 1- weist wenigstens einen Hubkolben 2 auf, der in einer Zylinderbohrung 3 eines Zylinderkurbelgehäuses 4 Hubbewegungen in die Richtungen HRh und HRn ausführt. Die Brennkraftmaschine 1 arbeitet als Viertaktmaschine im Dieselverfahren mit Direkteinspritzung, und sie ist mit Abgasturboladung ausgestattet -nicht dargestellt-. Das Zylinderkurbelgehäuse 4 trägt einen Zylinderkopf 5, der zusammen mit der mit einem Teilbereich der Zylinderbohrung 3 einen Brennraum 6 begrenzt. Zur Steuerung des Kraftstoffluftgemischs und der Abgase im Brennraum 6 sind wenigstens ein Einlassventil 7 und ein Auslassventil 8 vorgesehen, die mittels obenliegenden Nockenwellen 9 und 10 betätigt werden.

Der Hubkolben 2 ist mit zwei Pleueln 11 und 12 gekoppelt, die mit zwei parallelen Kurbelwellen 13 und 14 in Wirkverbindung stehen. Zwischen den Kurbelwellen 13 und 14 fungieren zwei Synchronisationszahnräder 15 und 16, die über ein Stirnradgetriebe 17 gegenseitig in Eingriff stehen. Dadurch rotieren die Synchronisationszahnräder 15 und 16 synchron in entgegengesetzten Dr1 und Dr2. Zwischen den Synchronisationszahnrädern 15 und 16 erstreckt sich eine Mittellängsachse A-A des Kolbens 2 bzw. der Zylinderbohrung 3. Auf einer einem Kolbenboden 18 des Hubkolbens 2 zugekehrten Seite weisen die Pleuel 11 und 12 beiderseits einer Mittellängsachse A-A festgelegte Pleuelaugen 19 und 20 auf. Letztere stehen unter Zwischenschaltung von Zentren Z1 und Z2 aufweisenden Pleuelbolzen 21 und 22 mit einem Schwenklager 23 in Wirkverbindung, das von Kolbenbohrungen 24 und 25 des Hubkolbens 2 aufgenommen wird. Anders ausgedrückt Laufflächen 26 und 27 des Schwenklagers 23 sind drehbar in die Kolbenbohrungen 24 und 25 eingesetzt.

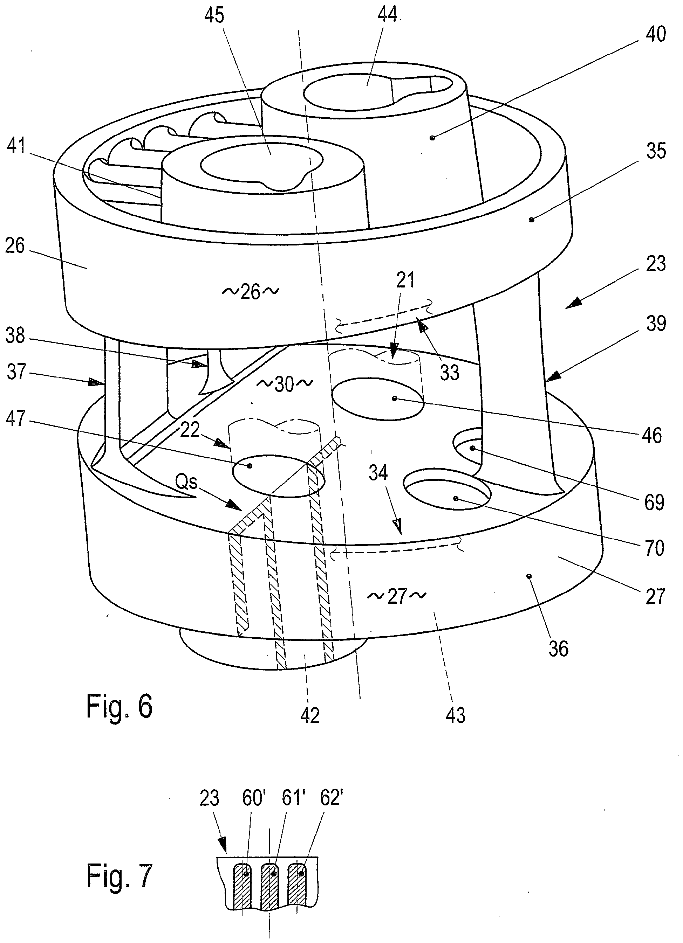

Das Schwenklager 23 ist im Bereich der Kolbenbohrungen 24 und 25 des Hubkolbens 2 mit radialen Lagerbereichen 28 und 29 versehen, die sich beiderseits der Mittellängsachse A-A erstrecken und einen Zwischenraum 30 bildend die Pleuelaugen 19 und 20 begrenzen. Der Zwischenraum 30 weist Ebenen E1 und E2 auf. Die Lagerbereiche 28 und 29 sind als Zylinderkörper 31 und 32 mit topfförmigen Querschnitt Qs -Fig. 6- ausgebildet. Dabei verfügen die Zylinderkörper 31 und 32 über etwa radiale mit Abstand zur Mittellängsachse A-A verlaufende Basiswände 33 und 34 und diese umringende Lagerringmäntel 35 und 36; letztere tragen die Laufflächen 26 und 27. Die Lagerringmäntel 35 und 36 sind von der Mittellängsachse A-A aus betrachtet in entgegengesetzte Richtungen RI und RII von den Basiswänden 33 und 34 weggeführt. Zwischen den Basiswänden 33 und 34 sind ein oder mehrere Verbindungsstützen 37, 38 und 39 wirksam, durch die die Zylinderkörper 31 und 32 zu einem Gussbauteilverbund zusammengefasst sind.

Die Lagerringmäntel 35 und 36 bzw. die Laufflächen 26 und 27 arbeiten mit den Kolbenbohrungen 24 und 25 drehbeweglich zusammen. Und die Basiswände 33 und 34 sind in axialer Richtung B-B des Schwenklagers 23 gesehen mit Lagerbuchsen 40, 41 und 42, 43 verbunden. In die Lagerbuchsen 40, 41 und 42, 43 sind Bolzenbohrungen 44, 45 und 46, 47 für die in Pleuelaugen 19 und 20 lagernden Pleuelbolzen 21 und 22 eingearbeitet.

Das Schwenklager 23 ist aus einem Werkstoff hergestellt, der bei hoher Festigkeit und geringem Verschließ eine gezielte leichtgewichtige Konstruktion des Schwenklagers 23 bewirkt. Der Werkstoff kann ein relativ dünne Wände zulassender Stahlguss sein, und zwar für statisch hoch belastbare und besonderem Verschließ ausgesetzten Bauteilen. Denkbar ist aber auch als Werkstoff einen ultrahochkohlenstoffhaltigen Leichtbaustahl (UHC) einzusetzen -siehe z.B. DE 10 2010 051 682 B4-.

Die Verbindungsstützen 37, 38 und 39 sind beabstandet zur Mittellängsachse A-A an die Basiswänden 33 und 34 angegliedert, und zwar in der Weise, dass zwei Verbindungsstützen 37 und 38 in Richtung des Kolbenbodens 18 des Hubkolbens 2 mit Abstand einerseits zu einer die Zentren Z1 und Z2 der Pleuelbolzen 21 und 22 der Pleuelaugen 19 und 29 schneidenden Pleuelaugenquerebene 50 und andererseits zu der Mittellängsachse A-A des Hubkolbens 2 angebracht sind, wobei die dritte Verbindungsstütze 39 in Richtung der Kurbelwellen 13 und 14 beabstandet zur Pleuelaugenquerebene 50 sowie auf der Mittellängsachse A-A angeordnet ist.

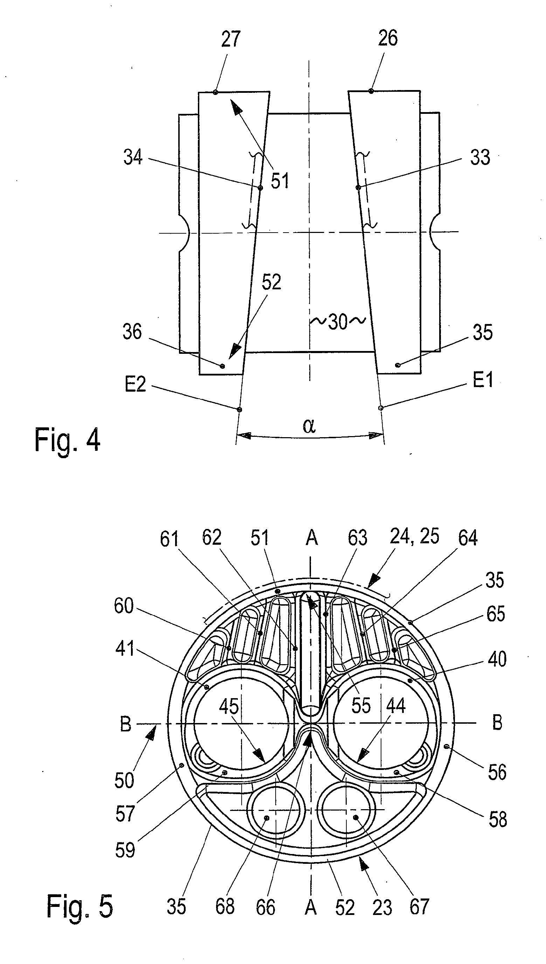

Die Basiswände 33 und 34 der Zylinderkörper 31 und 32 laufen mit den Ebenen E1 und E2 von einem ersten zum Kolbenboden 18 hin gerichteten Ringabschnitt 51 der Lagerringmäntel 35 und 36 dieser Zylinderkörper 31 und 32 aus bis zu einem zweiten gegenüberliegenden in Richtung Kurbelwellen 13 und 14 hin gerichteten Ringabschnitt 52 der Lagerringmäntel 35 und 36 zur Bildung eines Zwischenraums 30 V-förmig auseinander. Dabei schließen die Ebenen E1 und E2 einen spitzen Winkel α ein -Fig. 4-.

Die Lagerbuchsen 40, 41 und 42, 43 ragen mit definiertem Abstand As über radiale Begrenzungsebenen 53 und 54 der Lagerringmäntel 35 und 36 hinaus. Und jeder Lagerringmantel z.B. 35 ist an einer Innenseite 55 im Bereich der Lagerbuchsen 40 und 41 mit ersten örtlichen und Verdickungsabschnitte 56 und 57 versehen. Darüber hinaus weisen die Lagerbuchsen 40 und 41 in einem den Kurbelwellen 13 und 14 zugekehrten Bereich und beabstandet zu der Pleuelaugenquerebene 50 zwischen den ersten Verdickungsabschnitten 56 und 57 und den Bolzenbohrungen 44 und 45 der Lagerbuchsen 40 und 41 zweite Verdickungsabschnitte 58 und 59.

Von der Innenseite 55 des ersten Ringabschnitts 51 der Lageringmäntel 35 und 36 aus erstrecken sich in Richtung Lagerbuchsen 40 und 41 ein oder mehrere Versteifungsrippen 60, 61, 62, 63 64 und 65 -Fig. 5- bzw. 60', 61' und 62' -Fig. 7-. Dabei verläuft z.B. wenigstens Versteifungsrippe z.B. 61' radial in der Mittlängsachse A-A des Hubkolbens 2 zwischen der Innenseite 57 z.B. der Lagerringmäntel 35 und 36 und einem die Lagerbuchsen 40 und 41 verbindenden auf der Pleuelaugenebene 50 liegendem Quersteg 66. Die anderen Versteifungsrippen vereinen sekantenartig die Innenseite 55 mit den Lagerbuchsen 40 und 41. Schließlich weisen die Basiswände 32 und 33 der Zylinderkörper 33 und 34 zwischen der Pleuelaugenquerebene 50 und dem zweiten Ringabschnitt 52 ein oder mehrere Durchgangsöffnungen 67, 68 Fig. 5 und 69 70 -Fig. 6- zur Gewichtserleichterung auf.

Die Dimensionierung des Schwenklagers 23 hängt im Wesentlichen von der Leistungsgröße der Brennkraftmaschine 1 ab. Bei einem Durchmesser von 18 mm der Bolzenbohrungen 44, 45 und 46, 47 und einem Außendurchmesser von 54 mm der Zylinderkörper 31 und 32 sind Wandstärken in der Größe von ca. 2 mm für die Lagerringmäntel 33 und 34, die Basiswände 32 und 33 und die Versteifungsrippen; die Wandstärke der Lagerbuchsen kann bspw. je nach Beanspruchung größer sein. Für eine definierte Dimensionierung eignen sich iterative und/oder rechnerische Verfahren. Mit einer vergleichbaren Methodik lassen sich auch die Querschnitte der Verbindungsstützen 37, 38 und 39 auslegen.

## Patentansprüche

1. Brennkraftmaschine (1) mit einem Schwenklager (23) für zwei Pleuel (11, 12) in einem Hubkolben (2) einer Brennkraftmaschine (1) mit zwei Kurbelwellen (13, 14), die über den Hubkolben (2) und die Pleuel (11, 12) angetrieben werden, wobei das Schwenklager (23) von Kolbenbohrungen (25, 25) des Hubkolbens (2) aufgenommen wird und Bolzenbohrungen (44, 45, 46, 47) zur Lagerung von Pleuelbolzen (21, 22) für Pleuellaugen (19, 20) der Pleuel (11, 12) besitzt, wobei das Schwenklager (23) mit den Bolzenbohrungen (44, 45, 46, 47) versehene radiale Lagerbereiche (28, 29) aufweist, die beiderseits einer Mittellängsachse (A-A) des Hubkolbens (2) angeordnet sind und einen Zwischenraum (30) bildend die Pleuelaugen (19, 20) begrenzen,
**dadurch gekennzeichnet, dass**
- die Lagerbereiche (28, 29) des Schwenklagers (23) als Zylinderkörper (31, 32) mit topfartigem Querschnitt (Qs) ausgebildet sind, wovon jeder Zylinderkörper (31, 32) über eine Basiswand (33, 34) und einen Lagerringmantel (35, 36) verfügt, wobei
∘ die Basiswände beider Zylinderkörper sich mit Abstand zueinander erstrecken und die die Basiswände (33, 34) umringenden Lagerringmäntel (35, 36) in entgegensetzten Richtungen (RI, RII) von den Basiswänden (33, 34) weggeführt sind,
∘ zwischen den Basiswänden (33, 34) ein oder mehrere Verbindungsstützen (37, 38, 39) verlaufen,
∘ die Lageringmäntel (35, 36) mit den Kolbenbohrungen (24, 25) drehbeweglich zusammenarbeiten,
∘ die Basiswände (33, 34) mit in axialer Richtung (B-B) des Schwenklagers (23) ausgerichteten Lagerbuchsen (40, 41, 42, 43) verbunden sind, in die die Bolzenbohrungen (44, 45, 46, 47) eingearbeitet sind,
∘ die Basiswände (33, 34) der Zylinderkörper (31, 32) von einem zum Kolbenboden (18) hin gerichteten ersten Ringabschnitt (51) der Zylinderkörper (31, 32) aus bis zu einem gegenüberliegenden in Richtung Kurbelwellen (13, 14) hin gerichteten zweiten Ringabschnitt (52) der Zylinderkörper (31, 32) zur definierten Bildung des Zwischenraums (30) für die Pleuelaugen (19, 20) V-förmig auseinanderlaufen,
∘ zwischen den Basiswänden (33, 34) der Zylinderkörper (31, 32) drei Verbindungstützen (37, 38, 39) vorgesehen sind, wovon zwei Verbindungstützen (37, 38) in Richtung des Kolbenbodens (18) des Hubkolbens (2) mit Abstand einerseits zu einer die Zentren (Z1, Z2) der Pleuelbolzen (21, 22) der Pleuelaugen (19, 20) schneidenden Pleuelaugenebene (50) und andererseits zu der Mittellängsachse (A-A) des Hubkolbens (2) angebracht sind, wobei die dritte Verbindungstütze (39) in Richtung der Kurbelwellen (13, 14) beabstandet zur Pleuelaugenebene (50) sowie auf der Mittelängsachse (A-A) liegt
- das Schwenklager (23) aus einem Werkstoff besteht, der bei hoher Festigkeit und geringem Verschleiß eine gezielte geringgewichtige Konstruktion des Schwenklagers (23) bewirkt, und
- von der Innenseite (55) des ersten Ringabschnitts (51) aus in Richtung der Lagerbuchsen (40, 41, 42, 43) ein oder mehrere Versteifungsrippen (60, 61, 62, 63, 64, 65, 60', 61', 62') vorgesehen sind.

2. Brennkraftmaschine (1) nach Anspruch 1, **dadurch gekennzeichnet, dass** der Werkstoff ein Stahlguss für statisch und dynamisch hoch belastbare und besonderem Verschleiß ausgesetzte Bauteile ist.

3. Brennkraftmaschine (1) nach Anspruch 1, **dadurch gekennzeichnet, dass** als Werkstoff ein ultrahochkohlenstoffhaltiger Leichtbaustahl (UHC) dient.

4. Brennkraftmaschine (1) nach Anspruch 1, **dadurch gekennzeichnet, dass** die Lagerbuchsen (40, 41, 42, 43) mit definiertem Abstand über radiale Begrenzungsebenen (53, 54) der Lagerringmäntel (35, 36) hinausragen.

5. Brennkraftmaschine (1) nach Anspruch 1, **dadurch gekennzeichnet, dass** jeder Lagerringmantel (35, 36) an einer Innenseite (55) im Bereich der Lagerbuchsen (40, 41, 42, 43) mit ersten örtlichen Verdickungsabschnitten (56, 57) versehen ist.

6. Brennkraftmaschine (1) nach Anspruch 5, **dadurch gekennzeichnet, dass** die Lagerbuchsen (40, 41, 42, 43) in einem den Kurbelwellen (43, 44) zugekehrten Bereich und beabstandet zu der Pleuelaugenebene (50) zwischen den ersten Verdickungsabschnitten (56, 57) und in einem den Bolzenbohrungen (44, 45, 46, 47) der Lagerbuchsen (40, 41, 42, 43) liegenden Bereich zweite Verdickungsabschnitte (58, 59) aufweisen.

7. Brennkraftmaschine (1) nach den Ansprüchen 3und 6, **dadurch gekennzeichnet, dass** einerseits wenigstens eine der Versteifungsrippen (61') in der Mittellängsachse (A-A) des Hubkolbens (2) radial zwischen der Innenseite (55) der Lagerringmäntel (35, 36) und einem die Lagerbuchsen (40, 41, 42, 43) verbindenden auf der Pleuelaugenebene (50) liegenden Quersteg (66) verläuft und dass andererseits mehrere weitere Versteifungsrippen (61, 62, 63, 64, 61') sekantenartig die Innenseite (55) des ersten Ringabschnitts (51) mit den Lagerbuchsen (40, 41, 42, 43) vereinen.

8. Brennkraftmaschine (1) nach einem oder mehreren der vorangehenden Ansprüche, **dadurch gekennzeichnet, dass** die Basiswände (33, 34) zwischen der Pleuelaugenebene (50) und dem zweiten Ringabschnitt (52) eine oder mehrere Durchgangsöffnungen (67, 68, 69, 70) zur Gewichtserleichterung des Schwenklagers (23) aufweisen.

## Claims

1. Internal combustion engine (1) comprising a pivot bearing (23) for two connecting rods (11, 12) in a piston (2) of an internal combustion engine (1) that has two crankshafts (13, 14) which are driven by the piston (2) and the connecting rods (11, 12), the pivot bearing (23) being received by piston bores (25, 25) in the piston (2) and having bolt bores (44, 45, 46, 47) for bearing connecting rod bolts (21, 22) for connecting rod eyes (19, 20) of the connecting rods (11, 12), the pivot bearing (23) comprising radial bearing regions (28, 29) which are provided with the bolt bores (44, 45, 46, 47) and which are arranged on either side of a central longitudinal axis (A-A) of the piston (2) and delimit the connecting rod eyes (19, 20) while forming an intermediate space (30),
**characterized in that**
- the bearing regions (28, 29) of the pivot bearing (23) are designed as cylindrical bodies (31, 32) having a cup-shaped cross section (Qs), each cylindrical body (31, 32) having a base wall (33, 34) and an annular bearing sleeve (35, 36),
• the base walls of the two cylindrical bodies extending at a distance from one another and the annular bearing sleeves (35, 36) surrounding the base walls (33, 34) being guided away from the base walls (33, 34) in opposite directions (RI, RII),
• one or more connection supports (37, 38, 39) extending between the base walls (33, 34),
• the annular bearing sleeves (35, 36) rotatably engaging with the piston bores (24, 25),
• the base walls (33, 34) being connected to bearing bushes (40, 41, 42, 43) which are oriented in the axial direction (B-B) of the pivot bearing (23) and in which the bolt bores (44, 45, 46, 47) are formed,
• the base walls (33, 34) of the cylindrical bodies (31, 32) diverging in a V-shape from a first annular portion (51) of the cylindrical bodies (31, 32) which faces the piston base (18) to an opposite second annular portion (52) of the cylindrical bodies (31, 32) which faces crankshafts (13, 14), in order to form the intermediate space (30) for the connecting rod eyes (19, 20) in a defined manner,
• three connection supports (37, 38, 39) being provided between the base walls (33, 34) of the cylindrical bodies (31, 32), of which two connection supports (37, 38) are attached in the direction of the piston base (18) of the piston (2) at a distance from a connecting rod eye plane (50) that intersects the centers (Z1, Z2) of the connecting rod bolts (21, 22) of the connecting rod eyes (19, 20), and from the central longitudinal axis (A-A) of the piston (2), the third connection support (39) lying in the direction of the crankshafts (13, 14) so as to be spaced apart from the connecting rod eye plane (50) and lying on the central longitudinal axis (A-A),
- the pivot bearing (23) consisting of a material which, with high strength and low wear results, in a targeted low-weight design of the pivot bearing (23), and
- one or more reinforcement ribs (60, 61, 62, 63, 64, 65, 60', 61', 62') being provided from the inner side (55) of the annular ring portion (51) in the direction of the bearing bushes (40, 41, 42, 43).

2. Internal combustion engine (1) according to claim 1, **characterized in that** the material is a cast steel for components that are statically and dynamically highly resilient and are subject to particular wear.

3. Internal combustion engine (1) according to claim 1, **characterized in that** an ultra-high-carbon lightweight steel (UHC) is used as the material.

4. Internal combustion engine (1) according to claim 1, **characterized in that** the bearing bushes (40, 41, 42, 43) project beyond radial boundary planes (53, 54) of the annular bearing sleeves (35, 36) at a defined distance therefrom.

5. Internal combustion engine (1) according to claim 1, **characterized in that** each annular bearing sleeve (35, 36) is provided with first local thickened potions (56, 57) on an inner side (55) in the region of the bearing bushes (40, 41, 42, 43).

6. Internal combustion engine (1) according to claim 5, **characterized in that** the bearing bushes (40, 41, 42, 43) comprise second thickened portions (58, 59) in a region facing the crankshafts (43, 44) and spaced apart from the connecting rod eye plane (50) between the first thickened portions (56, 57), and in a region lying the bore holes (44, 45, 46, 47) of the bearing bushes (40, 42, 42, 43).

7. Internal combustion engine (1) according to claims 3 and 6, **characterized in that** at least one of the reinforcement ribs (61'), in the central longitudinal axis (A-A) of the piston (2), extends radially between the inner side (55) of the annular bearing sleeves (35, 36) and a transverse strip (66) connecting the bearing bushes (40, 41, 42, 43) to the connecting rod eye plane (50), and **in that** a plurality of further reinforcement ribs (61, 62, 63, 64, 61') join the inner side (55) of the first annular portion (51) and the bearing bushes (40, 41, 42, 43) in the manner of secants.

8. Internal combustion engine (1) according to one or more of the preceding claims, **characterized in that** the base walls (33, 34) comprise one or more through-openings (67, 68, 69, 70) between the connecting rod eye plane (50) and the second annular portion (52), in order to reduce the weight of the pivot bearing (23).

## Revendications

1. Moteur à combustion interne (1) comportant un palier pivotant (23) pour deux bielles (11, 12) dans un piston alternatif (2) d'un moteur à combustion interne (1) comportant deux vilebrequins (13, 14) qui sont entraînés par le piston alternatif (2) et les bielles (11, 12), dans lequel le palier pivotant (23) est reçu par des alésages de piston (25, 25) du piston alternatif (2) et comporte des alésages de boulon (44, 45, 46, 47) pour monter des axes de bielle (21, 22) pour des oeillets de bielle (19, 20) des bielles (11, 12), le palier pivotant (23) présentant des zones de palier (28, 29) radiales pourvues des alésages de boulon (44, 45, 46, 47), lesquelles zones de palier sont disposées de part et d'autre d'un axe longitudinal central (A-A) du piston alternatif (2) et délimitent un espace intermédiaire (30) formant les oeillets de bielle (19, 20) formant un espace intermédiaire (30),
**caractérisé en ce que**
- les zones de palier (28, 29) du palier pivotant (23) sont réalisées sous la forme de corps cylindriques (31, 32) avec une section transversale (Qs) en forme de pot, dont chaque corps cylindrique (31, 32) présente une paroi de base (33, 34) et une enveloppe à bague de palier (35, 36),
• les parois de base des deux corps cylindriques s'étendant à distance l'une de l'autre et les enveloppes à bague de palier (35, 36) entourant les parois de base (33, 34) étant éloignées des parois de base (33, 34) dans des directions opposées (RI, RII),
• un ou plusieurs supports de liaison (37, 38, 39) s'étendant entre les parois de base (33, 34),
• les enveloppes à bagues de palier (35, 36) coopérant en rotation avec les alésages de piston (24, 25),
• les parois de base (33, 34) étant reliées à des manchons de palier (40, 41, 42, 43) qui sont alignées dans la direction axiale (B-B) du palier pivotant (23), dans lesquelles les alésages de boulon (44, 45, 46, 47) sont usinés,
les parois de base (33, 34) des corps cylindriques (31, 32) divergeant en forme de V d'une première partie annulaire (51) des corps cylindriques (31, 32) dirigée vers le fond de piston (18) à une seconde partie annulaire opposée (52) des corps cylindriques (31, 32) dirigée vers les vilebrequins (13, 14) pour la formation définie de l'espace intermédiaire (30) pour les oeillets de bielle (19, 20),
• trois supports de liaison (37, 38, 39) étant prévus entre les parois de base (33, 34) des corps cylindriques (31, 32), dont deux supports de liaison (37, 38) sont disposés dans la direction du fond de piston (18) du piston alternatif (2) à une certaine distance, d'une part, d'un plan à oeillet de bielle (50) qui coupe les centres (Z1, Z2) des axes de bielle (21, 22) des oeillets de bielle (19, 20), et, d'autre part, de l'axe longitudinal central (A-A) du piston alternatif (2), le troisième support de liaison (39) se situant dans la direction des vilebrequins (13, 14) à distance du plan à oeillet de bielle (50) ainsi que sur l'axe longitudinal central (A-A).
- le palier pivotant (23) consiste en un matériau qui, à haute résistance et à faible usure, réalise une construction ciblée à faible poids du palier pivotant (23), et
- une ou plusieurs nervures de renforcement (60, 61, 62, 62, 63, 64, 65, 60', 61', 61', 62') sont prévues de l'intérieur (55) de la première partie annulaire (51) dans la direction des manchons de palier (40, 41, 42, 43).

2. Moteur à combustion interne (1) selon la revendication 1, **caractérisé en ce que** le matériau est un acier moulé pour composants pouvant résister à des charges statiques et dynamiques élevées et exposés à une usure particulière.

3. Moteur à combustion interne (1) selon la revendication 1, **caractérisé en ce que** le matériau utilisé est un acier pour construction légère (UHC) à très haute teneur en carbone.

4. Moteur à combustion interne (1) selon la revendication 1, **caractérisé en ce que** les manchons de palier (40, 41, 42, 43) dépassent des plans limites radiaux (53, 54) des enveloppes à bagues de palier (35, 36) à une distance définie.

5. Moteur à combustion interne (1) selon la revendication 1, **caractérisé en ce que** chaque enveloppe à bagues de palier (35, 36) est pourvue, sur un côté intérieur (55), dans la zone des manchons de palier (40, 41, 42, 43), de premières sections épaississantes locales (56, 57).

6. Moteur à combustion interne (1) selon la revendication 5, **caractérisé en ce que** les manchons de palier (40, 41, 42, 43) présentent, dans une zone tournée vers les vilebrequins (43, 44) et à une certaine distance du plan à oeillet de bielle (50) entre les premières sections épaississantes (56, 57) et dans une zone située dans les alésages de boulon (44, 45, 46, 47) des manchons de palier (40, 41, 42, 43).

7. Moteur à combustion interne (1) selon les revendications 3 et 6, **caractérisé en ce que**, d'une part, au moins l'une des nervures de raidissement (61') dans l'axe longitudinal central (A-A) du piston alternatif (2) évolue radialement entre le côté intérieur (55) des enveloppes à bagues de palier (35, 36) et une traverse (66) située sur le plan à oeillet de bielle (50) reliant les manchons de palier (40, 41, 42, 43) et **en ce que**, d'autre part, plusieurs autres nervures de renforcement (61, 62, 63, 64, 61') relient de manière sécante le côté intérieur (55) de la première section annulaire (51) aux manchons de palier (40, 41, 42, 43).

8. Moteur à combustion interne (1) selon une ou plusieurs des revendications précédentes, **caractérisé en ce que** les parois de base (33, 34) entre le plan à oeillet de bielle (50) et la seconde section annulaire (52) présentent une ou plusieurs ouvertures de passage (67, 68, 69, 70) pour réduire le poids du palier pivotant (23).
